(19) Europäisches Patentamt
European Patent Office
Office européen des brevets

(11) EP 0 644 888 B1

(12) EUROPÄISCHE PATENTSCHRIFT

(45) Veröffentlichungstag und Bekanntmachung des Hinweises auf die Patenterteilung:
**13.03.1996 Patentblatt 1996/11**

(21) Anmeldenummer: **93912957.3**

(22) Anmeldetag: **11.06.1993**

(51) Int Cl.[6]: **C07F 7/08**

(86) Internationale Anmeldenummer:
**PCT/EP93/01487**

(87) Internationale Veröffentlichungsnummer:
**WO 93/25559 (23.12.1993 Gazette 1993/30)**

# (54) SULFONIUMSALZE UND VERFAHREN ZU DEREN HERSTELLUNG

SULPHONIUM SALTS AND PROCESS FOR PRODUCING THEM

SELS SULFONIQUES ET LEUR PROCEDE DE FABRICATION

(84) Benannte Vertragsstaaten:
**AT BE CH DE ES FR GB IT LI NL**

(30) Priorität: **12.06.1992 DE 4219376**

(43) Veröffentlichungstag der Anmeldung:
**29.03.1995 Patentblatt 1995/13**

(73) Patentinhaber: **WACKER-CHEMIE GMBH
D-81737 München (DE)**

(72) Erfinder: **HERZIG, Christian
D-8221 Taching am See (DE)**

(56) Entgegenhaltungen:
**EP-A- 0 404 031** **US-A- 4 513 137**

- **CHEMICAL ABSTRACTS, vol. 114, 1991, Columbus, Ohio, US; abstract no. 246955c, TAKEDA, M. ET AL. 'PREPARATION OF 4-DIALKYLSULFONIOPHENYL ALKYL CARBONATES AS PROTECTING AGENTS' Seite 727 ;**

EP 0 644 888 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft neue Sulfoniumsalze und ein Verfahren zu deren Herstellung.

Photoaktive Triarylsulfoniumsalze sind aus DE-A 25 18 749, DE-A 25 18 652 und DE-A 28 39 586 bekannt und werden als Photoinitiatoren zur Polymerisation von kationisch polymerisierbaren organischen Substanzen, z.B. Epoxiden, Vinylethern, Epoxygruppen enthaltenden Organopolysiloxanen, Vinyloxygruppen enthaltenden Organopolysiloxanen und Olefinen, verwendet. Die kationisch polymerisierbaren Substanzen sind aber unpolar bis wenig polar, besonders wenn die polymerisierbaren Gruppen in Organopolysiloxanen enthalten sind. In EP-A 404 031 (offengelegt am 27. Dezember 1990, J.L. Desorcie et al., General Electric Company) sind Triarylsulfoniumsalze beschrieben, wobei mindestens ein Arylrest durch eine langkettige Alkoxygruppe substituiert ist.

Es bestand die Aufgabe photoaktive Sulfoniumsalze bereitzustellen, die als Photoinitiatoren zur Polymerisation von kationisch polymerisierbaren organischen Substanzen eingesetzt werden können und die in diesen Substanzen löslich sind. Die Aufgabe wird durch die Erfindung gelöst.

Gegenstand der Erfindung sind Sulfoniumsalze der allgemeinen Formel

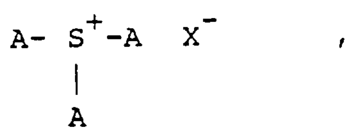

wobei A gleich oder verschieden ist und einen einwertigen Rest der allgemeinen Formel

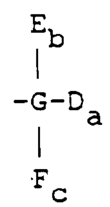

bedeutet, worin

G einen aromatischen Kohlenwasserstoffrest mit 6 bis 14 Kohlenstoffatomen je Rest oder einen mindestens ein Sauerstoff- und/oder Schwefelatom enthaltenden aromatischen Kohlenwasserstoffrest mit 5 bis 14 Ringatomen je Rest bedeutet, mit der Maßgabe, daß im Rest G ein Wasserstoffatom durch eine chemische Bindung zum Schwefelatom ersetzt ist und D, E und F jeweils Substituenten von G bedeuten, wobei

D einen Rest der Formel

$$-(O)_x-(R)_y-SiR^1_3,$$

E einen Rest der Formel

$$-OR^2,$$

F einen Rest der Formel

$$-R^3,$$

a 1, 2 oder 3,
b 0, 1 oder 2,
c 0, 1 oder 2,
x 0 oder 1,
y 0 oder 1, vorzugsweise 1,
R einen zweiwertigen Kohlenwasserstoffrest mit 1 bis 18 Kohlenstoffatomen je Rest, der gegebenfalls durch mindestens ein Sauerstoffatom und/oder ein Schwefelatom und/oder eine Carboxylgruppe unterbrochen ist,
$R^1$ gleich oder verschieden ist und einen einwertigen Kohlenwasserstoffrest mit 1 bis 18 Kohlenstoffatomen je Rest, der gegebenenfalls durch mindestens ein Sauerstoffatom unterbrochen ist,
$R^2$ einen einwertigen Kohlenwasserstoffrest mit 1 bis 18 Kohlenstoffatomen je Rest, der gegebenenfalls durch mindestens ein Sauerstoffatom unterbrochen ist,
$R^3$ einen einwertigen Kohlenwasserstoffrest mit 1 bis 10 Kohlenstoffatomen je Rest, der gegebenenfalls durch mindestens ein Sauerstoffatom und/oder ein Schwefelatom unterbrochen ist, und
$X^-$ ein Halogenidion $Z^-$ oder ein Tosylatanion oder ein schwach nukleophiles oder nicht nukleophiles Anion $Y^-$, ausgewählt aus der Gruppe von $CF_3CO_2^-$, $BF_4^-$, $PF_6^-$, $AsF_6^-$, $SbF_6^-$, $ClO_4^-$, $HSO_4^-$ und $C_nF_{(2n+1-m)}H_m\text{-}SO_3^-$,
wobei n eine ganze Zahl im Wert von 1 bis 12 und
m 0 oder eine ganze Zahl im Wert von bis zu 2n-1 ist,
bedeutet.

Beispiele für aromatische Kohlenwasserstoffreste G sind der Phenyl-, Naphthyl- und Anthrylrest.

Beispiele für mindestens ein Sauerstoff- und/oder Schwefelatom enthaltende aromatische Kohlenwasserstoffreste G sind der 2-Furyl-, 3-Furyl-, 2-Thienyl- und 3-Thienylrest.

Vorzugsweise ist der Rest A ein Rest der Formel

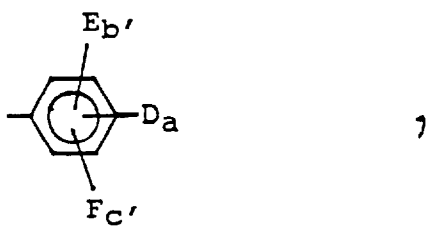

wobei D, E und F jeweils einen in 2-, 3-, 4-, 5- oder 6-Position an den Benzolring gebundenen Rest bedeuten,

D, E und F die oben dafür angegebene Bedeutung haben und
b' 0 oder 1 und
c' 0 oder 1 bedeutet.

Beispiele für den zweiwertigen Kohlenwasserstoffrest R sind $-CH_2-$, $-(CH_2)_2-$, $-(CH_2)_3-$, $-(CH_2)_4-$ und $-(CH_2)_6-$.

Beispiele für den zweiwertigen Kohlenwasserstoffrest R, der durch mindestens ein Sauerstoffatom und/oder Schwefelatom und/oder eine Carboxylgruppe unterbrochen ist, sind $-CH_2CH_2OCH_2CH_2-$, $-CH_2CH_2OCH_2CH_2CH_2-$ und $-CH_2CH_2OCH_2CH_2OCH_2CH_2CH_2-$.

Beispiele für Kohlenwasserstoffreste $R^1$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest und Octadecylreste, wie der n-Octadecylrest.

Beispiele für durch mindestens ein Sauerstoffatom unterbrochene Kohlenwasserstoffreste $R^1$ sind Alkoxyalkylreste, wie $-CH_2CH_2OCH_3$, $-CH_2CH_2OCH_2CH_3$ und $-CH_2CH_2OCH_2CH_2CH_2CH_3$.

Vorzugsweise enthalten alle drei am Si-Atom gebundenen Reste $R^1$ zusammen 3 bis 25 aliphatische Kohlenstoffatome, bevorzugt 8 bis 15 aliphatische Kohlenstoffatome.

Die Beispiele für Reste $R^1$ gelten in vollem Umfang für die Reste $R^2$.

Beispiele für Kohlenwasserstoffreste $R^3$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest und Decylreste, wie der n-Decylrest; Arylreste, wie der Phenylrest.

Beispiele für durch mindestens ein Sauerstoffatom und/oder Schwefelatom unterbrochene Kohlenwasserstoffreste $R^3$ sind $-CH_2CH_2OCH_3$, $-CH_2CH_2OCH_2CH_3$ und $-CH_2CH_2SCH_2CH_3$.

Beispiele für Reste D sind

$$-O(CH_2)_3SiMe_2Et$$

$$-O(CH_2)_3SiMeBu_2$$

$$-O(CH_2)_3SiMeOct_2$$

$$-O(CH_2)_3SiBu_3$$

$$-O(CH_2)_2O(CH_2)_3SiMe_2Oct$$

$$-O(CH_2)_2O(CH_2)_3SiMeOct_2$$

$$-O(CH_2)_2O(CH_2)_3SiBu_3$$

$$-O(CH_2)_3SiEt_3$$

$$-(CH_2)_3SiMeOct_2$$

$$-(CH_2)_3SiMe_2Oct$$

(worin Me Methylrest, Et Ethylrest, Bu n-Butylrest und Oct n-Octylrest bedeutet), wobei die Reste

$-O(CH_2)_2O(CH_2)_3SiMe_2Oct$ und $-(CH_2)_3SiMe_2Oct$

bevorzugt sind.

Beispiele für Reste E sind der Methoxyrest, Ethoxyrest und n-Butoxyrest.

Beispiele für Reste F sind der Methyl-, Ethyl-, Propyl-, 2-Methylpropyl- und der n-Butylrest.

Beispiele für Reste A sind

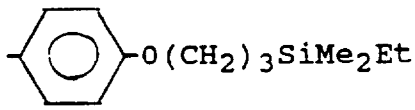

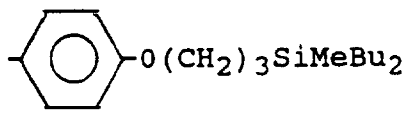

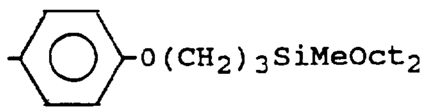

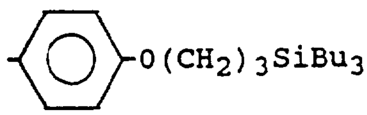

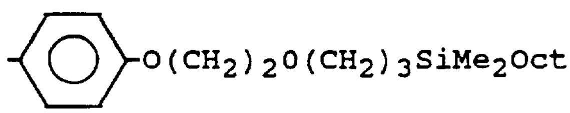

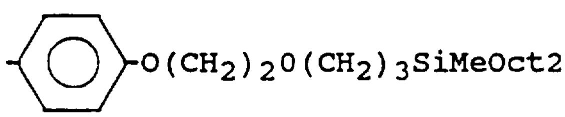

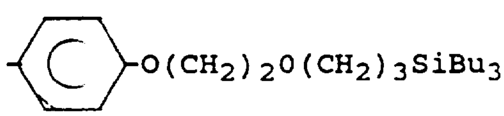

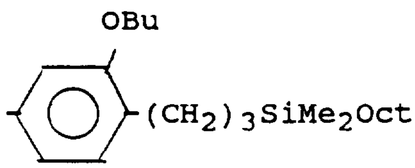

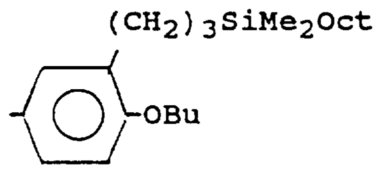

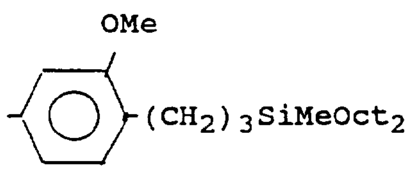

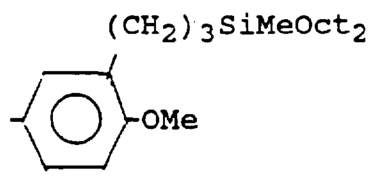

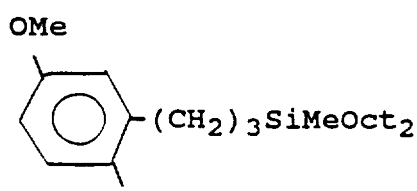

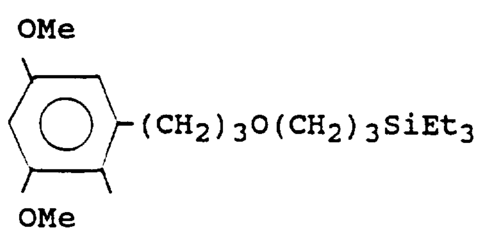

und

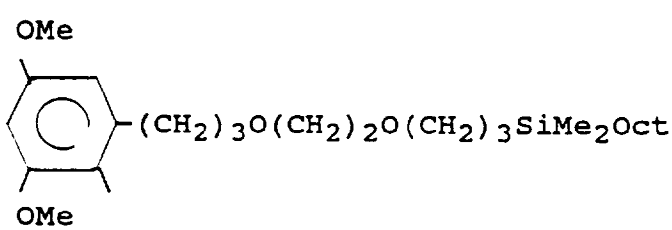

(worin Me Methylrest, Et Ethylrest, Bu n-Butylrest und Oct n-Octylrest bedeutet).

Beispiele für das Anion $C_nF_{(2n+1-m)}H_m\text{-}SO_3^-$ sind die Anionen $CF_3SO_3^-$ und $C_4F_9SO_3^-$.

Bevorzugte Beispiele für Anionen $Y^-$ sind $PF_6^-$, $AsF_6^-$ und $SbF_6^-$, wobei $SbF_6^-$ besonders bevorzugt ist.

Bevorzugt sind als Sulfoniumsalze solche der Formel

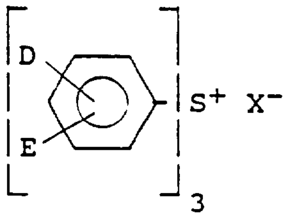

wobei D, E und X die oben dafür angegebene Bedeutung haben.

Besonders bevorzugt ist das Sulfoniumsalz der Formel

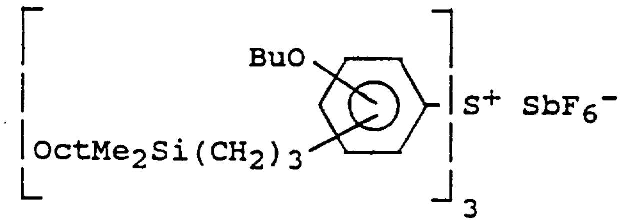

Die Löslichkeit der erfindungsgemäßen Sulfoniumsalze ist in unpolaren Medien, wie n-Alkanen, wesentlich größer als die der vergleichbaren (gleiche Anzahl der Atome im Substituenten des Phenylrestes) Sulfoniumsalze gemäß der eingangs erwähnten EP-A 404 031.

Beispielsweise ist das Sulfoniumsalz der Formel

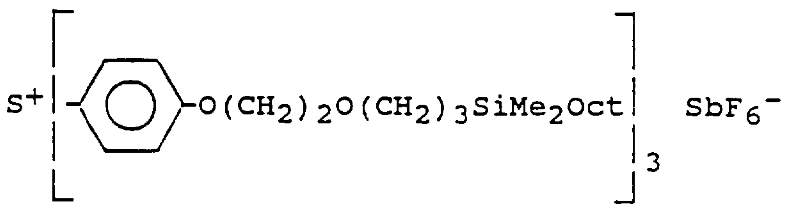 ,

das 15 Kohlenstoffatome im Rest D enthält, unbegrenzt in n-Heptan löslich.

Gegenstand der Erfindung ist weiterhin ein Verfahren zur Herstellung der Sulfoniumsalze, dadurch gekennzeichnet, daß in einer 1. Stufe
ein Silan der Formel

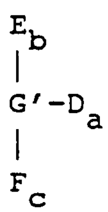 ,

worin G' einen aromatischen Kohlenwasserstoffrest mit 6 bis 14 Kohlenstoffatomen je Rest oder einen mindestens ein Sauerstoff- und/oder Schwefelatom enthaltenden aromatischen Kohlenwasserstoffrest mit 5 bis 14 Ringatomen je Rest bedeutet und D, E und F jeweils Substituenten von G' bedeuten, und
D, E, F, a, b und c die oben dafür angegebene Bedeutung haben,
mit Thionylhalogenid in Gegenwart einer Lewissäure und einem inerten organischen Lösungsmittel
zu einem Sulfoniumhalogenid der Formel

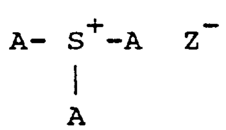 ,

wobei $Z^-$ ein Halogenidion bedeutet und

A die oben dafür angegebene Bedeutung hat,
umgesetzt wird und gegebenenfalls
in einer 2. Stufe
das so erhaltene Sulfoniumhalogenid mit einem Alkalimetallsalz der Formel

$$M^+Y^-,$$

wobei $M^+$ ein Alkalimetallkation, Ammoniumion oder quaternäres Ammoniumkation bedeutet und
$Y^-$ die oben dafür angegebene Bedeutung hat, in Gegenwart von organischem Lösungsmittel umgesetzt wird.

Der Rest G' hat die Bedeutung von G, mit der Maßgabe, daß im Rest G die chemische Bindung zum Schwefeiatom durch ein Wasserstoffatom ersetzt ist.

Beispiele für bei dem erfindungsgemäßen Verfahren eingesetzte Silane sind

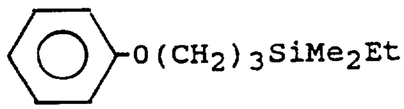

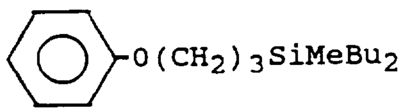

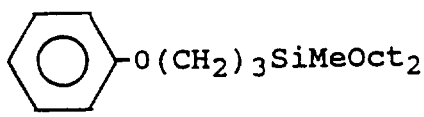

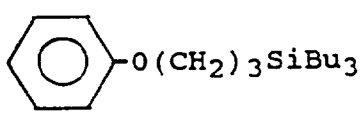

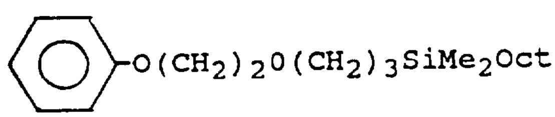

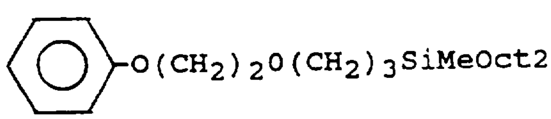

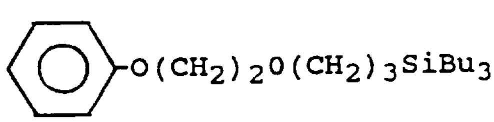

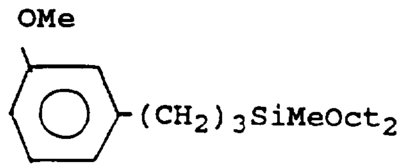

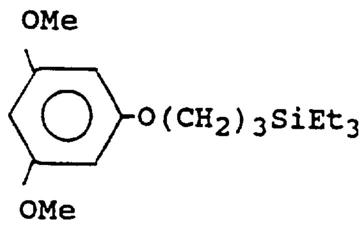

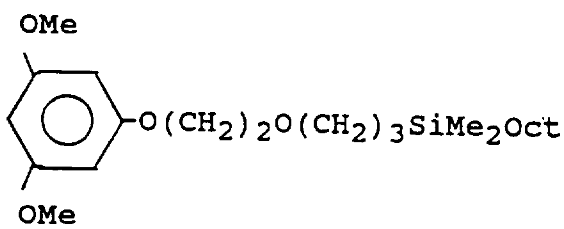

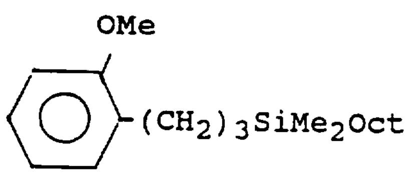

und

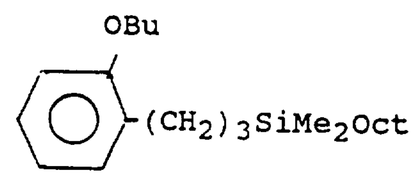

(worin Me Methylrest, Et Ethylrest, Bu n-Butylrest und Oct n-Octylrest bedeutet).

Die bei dem erfindungsgemäßen Verfahren eingesetzten Silane, wie Tetraalkylsilane, sind nach bekannten Verfahren herstellbar. Sie können beispielsweise folgendermaßen hergestellt werden:

Phenylallylether, erhältlich nach der in DE-A 39 35 775 beschriebenen Methode, wird an Hydrogenchlorsilanen in Gegenwart von Hydrosilylierungskatalysatoren, wie Platinkatalysatoren, addiert und die so erhaltenen Phenoxyalkylchlorsilane werden mit metallorganischen Reagenzien, wie Alkyllithium oder Alkylgrignardverbindungen, alkyliert. Zur vollständigen Alkylierung ist dabei ein Überschuß (10 bis 50 Mol%) an Alkylmetallreagenz, bezogen auf die Si-gebundenen Chloratome, nötig. Werden nicht alle Si-gebundenen Chloratome gegen Si-gebundene Alkylgruppen ausgetauscht, führt dies bei der Aufarbeitung der Tetraalkylsilane zu unerwünschten Nebenreaktionen, wie Entstehung von Silanolen oder Disiloxanbildung.

Die bevorzugt eingesetzten längerkettigen Silane, d.h. solche mit mindestens 15 aliphatischen Kohlenstoffatomen, sind undestillierbare, meist dünnflüssige Öle. Sie sind chemisch weitgehend inert, besitzen aufgrund der Phenyloxygruppe aber eine sehr gute Reaktivität gegenüber Elektrophilen.

Die Silane werden mit Thionylhalogenid unter Lewissäurekatalyse nach dem Verfahren von K.H. Bell, Austral. Journal of Chemistry 38, 1209 (1985), umgesetzt. Das erfindungsgemäße Verfahren wird vorzugsweise bei einer Temperatur von 0°C bis 40°C und vorzugsweise beim Druck der umgebenden Atmosphäre durchgeführt. Werden Silane mit mindestens zwei Alkoxygruppen, die an der Aromaten, vorzugsweise am Benzolring gebundenen sind, eingesetzt, kann das erfindungsgemäße Verfahren bei einer Temperatur von unter 0°C durchgeführt werden.

Beispiele für das beim erfindungsgemäßen Verfahren eingesetzte Thionylhalogenid sind Thionylfluorid, Thionylchlorid, Thionylbromid und Thionyljodid, wobei das Thionylchlorid ein bevorzugtes Beispiel ist.

Thionylhalogenid wird vorzugsweise in Mengen von 1,0 bis 5,0 Mol, bevorzugt 1,5 bis 2,5 Mol, bezogen auf jeweils 1,0 Mol eingesetztes Silan, eingesetzt.

Beispiele für die bei dem erfindungsgemäßen Verfahren eingesetzten Lewissäuren sind Titantetrachlorid, Zirkontetrachlorid, Zinntetrachlorid, Siliciumtetrachlorid, Aluminiumtrichlorid, Bortrichlorid und Antimonpentachlorid, wobei Titan-, Zirkon- und Zinntetrachlorid bevorzugte Beispiele sind.

Die Lewissäuren können in katalytisch wirksamen Mengen eingesetzt werden. Vorzugsweise wird Lewissäure in Mengen von 0,05 bis 1,0 Mol, bevorzugt 0,1 bis 0,4 Mol, bezogen auf jeweils 1,0 Mol eingesetztes Silan, eingesetzt.

Das bei dem erfindungsgemäßen Verfahren eingesetzte inerte organische Lösungsmittel ist vorzugsweise aprotisch und mit Wasser nicht oder nur schwer mischbar. Beispiele für aprotische Lösungsmittel sind Chlorkohlenwasserstoffe, wie Methylenchlorid, 1,1,1-Trichlorethan und Trichlorethylen, und Aromaten, wie Toluol, Xylol, Ethylbenzol und Dimethylformamid.

Inertes organisches Lösungsmittel wird in Mengen von vorzugsweise 50 bis 500 Gewichtsteilen, bezogen auf 100 Gewichtsteile Silan, eingesetzt.

In der 1. Stufe des erfindungsgemäßen Verfahrens kann das Sulfoniumsalz mit komplexen Anionen der eingesetzten Lewissäuren isoliert werden, z.B. als Hexachlorostannat bei Verwendung von Zinntetrachlorid. Da die meisten dieser Salze jedoch leicht Halogenwasserstoff abspalten und damit unter Umgebungsbedingungen instabil sind, wird vorzugsweise durch Zugabe von Basen das komplexe Anion und gegebenenfalls überschüssige Lewissäure vollständig zerstört. Bevorzugt wird als Base Natriumhydroxid eingesetzt, weitere Beispiele für Basen sind Kaliumhydroxid und Ammoniakwasser.

Base wird vorzugsweise in Mengen von 1,0 bis 1,2 Mol je Mol als Säure abhydrolysierbares Halogenid eingesetzt. Da bevorzugt Thionylchlorid bei dem erfindungsgemäßen Verfahren eingesetzt wird, wird bevorzugt ein Sulfoniumchlorid erhalten. Das Sulfoniumhalogenid wird nach Abtrennung der organischen Phase aus der wäßrigen Phase gewonnen.

Zwischenstufen bei der Bildung der Sulfoniumsalze sind Sulfide und Sulfoxide, die in geringer Menge auch im Sulfoniumsalz enthalten sein können. Aufgrund der chemischen Ähnlichkeit mit dem Sulfoniumsalz bei längerkettigen Resten D, E und F ist eine Abtrennung recht aufwendig. Werden die Sulfoniumsalze als nicht kristallisierende zähe Öle erhalten, werden nicht vollständig abreagierende Zwischenstufen bevorzugt in ihnen belassen. Diese Zwischenstufen sind zugleich auch Zerfallsprodukte der Sulfoniumsalze nach UV-Bestrahlung, wodurch am Ende der Reaktionsfolge Säuren entstehen, die kationische Polymerisationen auslösen.

Das Halogenid der Sulfoniumhalogenide kann in einer 2. Verfahrensstufe gegen ein weniger nukleophiles Anion einer stärkeren Säure ausgetauscht werden.

Beispiele für $M^+$ sind $Na^+$, $K^+$, $Li^+$, $NH_4{}^+$ und $NR_4^{4+}$, wobei $R^4$ einen einwertigen Kohlenwasserstoffrest mit 1 bis 8 Kohlenstoffatomen je Rest bedeutet.

Beispiele für Reste $R^4$ sind Alkylreste, wie der Methyl-, Ethyl- und n-Butylrest.

Bevorzugte Beispiele für Alkalimetallsalze $M^+Y^-$ sind $NaPF_6$, $NaAsF_6$ und $NaSbF_6$, wobei $NaSbF_6$ besonders bevorzugt ist.

Das Alkalimetallsalz wird vorzugsweise in Mengen von 1,1 bis 1,5, bevorzugt 1,1 bis 1,2 Mol, je Mol des in der 1. Stufe des erfindungsgemäßen Verfahrens erhaltenen Sulfoniumhalogenids eingesetzt.

Der Anionenaustausch erfolgt vorzugsweise in Gegenwart eines organischen Lösungsmittels. Bevorzugt wird als organisches Lösungsmittel solches verwendet, in dem das Sulfoniumhalogenid und das Alkalimetallsalz $M^+Y^-$ gut löslich, das entstehende Alkalimetallhalogenid $M^+Z^-$ aber schwer löslich ist. Beispiele für organische Lösungsmittel sind Ketone, wie Aceton, Methylethylketon, Methylisobutylketon; Ester, wie Ethylacetat, Butylacetat und Ethylbutyrat und Alkohole, wie Ethanol, Isopropanol und Butanol.

Die gegebenenfalls in der 2. Stufe durchgeführte Umsetzung erfolgt vorzugsweise durch Mischen von Lösungen des Sulfoniumhalogenids und des Alkalimetallsalzes $M^+Y^-$ in organischem Lösungsmittel. Das Mischen erfolgt vorzugsweise bei Raumtemperatur und dem Druck der umgebenden Atmosphäre. Es können aber auch höhere oder niedrigere Temperaturen verwendet werden.

Das bei der Umsalzung entstehende Alkalimetallhalogenid, wie Natriumchlorid, fällt nach dem Mischen aus und kann abfiltriert werden.

Wird das Alkalimetallsalz, wie Natriumhexafluoroantimonat, in leichtem Überschuß eingesetzt, wird mehr als 95 % Anionenaustausch erreicht. Es wird eine weitgehend saubere Sulfoniumhexafluoroantimonatlösung erhalten. Noch enthaltene anorganische Salze werden durch Eindampfen der Lösung und erneutes Lösen des Öls in organischem Lösungsmittel, vorzugsweise wenig polares organisches Lösungsmittel, wie Toluol, Cyclohexan oder n-Alkane, entfernt. Durch erneute Filtration werden saubere Lösungen der Sulfoniumsalze erhalten. Das organische Lösungsmittel kann entfernt werden oder die reinen Sulfoniumsalze können zur besseren Handhabung vorzugsweise in 30 bis 60 %iger Lösung belassen werden.

Das erfindungsgemäße Verfahren kann absatzweise, halbkontinuierlich oder vollkontinuierlich durchgeführt werden.

Die Sulfoniumsalze sind lichtempfindlich und zersetzen sich z.B. bei Bestrahlung mit Ultraviolettlicht nach einem

mehrstufigen Mechanismus, der im Buch "UV-Curing: Science & Technology" von P. Pappas auf Seite 34 beschrieben ist. Als aktives Endprodukt dieser Photolyse wird die entstandene Brönstedsäure, z.B. $HPF_6$, $HAsF_6$ oder $HSbF_6$, angesehen, die ihrerseits die Polymerisation von kationisch polymerisierbaren Substanzen, wie Epoxiden oder Vinylethern, startet.

Die erfindungsgemäßen Sulfoniumsalze eignen sich als Photoinitiatoren für die Polymerisation von kationisch polymerisierbaren organischen Substanzen, wie Epoxiden, Vinylethern, Epoxygruppen enthaltenden Organopolysiloxanen, Alkenyloxygruppen, wie Vinyloxygruppen oder Propenyloxygruppen, enthaltenden Organopolysiloxanen und Olefinen. Solche Substanzen sind beispielsweise in US-A 5,057,549, DE-A 40 02 922 sowie in den eingangs genannten Patentschriften beschrieben.

**Beispiel 1:**

a) Zu 88,5 g (0,66 Mol) Allylphenylether werden unter Stickstoffatmosphäre 4 mg Platin in Form von Hexachloroplatinsäure zugegeben und die Mischung wird auf 80°C erwärmt. Zu der Mischung werden innerhalb von zwei Stunden 125 g Dimethylchlorsilan zudosiert, wobei die Sumpftemperatur unter 50°C fällt. Unter leichtem Rückfluß wird die Mischung weitere sechs Stunden gerührt. Nach fraktionierter Destillation werden insgesamt 112 g 3-Phenoxypropyldimethylchlorsilan erhalten. Das Produkt hat eine Säurezahl von 248 (theoretisch 244).

b) Unter Schutzgasatmosphäre werden 0,5 Mol einer Ethylgrignardlösung in Diethylether vorgelegt. Bei Raumtemperatur werden 92 g (0,40 Mol) des Chlorsilans, dessen Herstellung oben unter a) beschrieben ist, zudosiert. Die Mischung wird dann zum Sieden erwärmt und weitere zwei Stunden bei 40°C gerührt. Die Magnesiumsalze werden dann durch Zugabe von verdünnter Salzsäure aufgelöst. Nach Phasentrennung wird die Etherphase zweimal mit je 300 ml Wasser gewaschen, bei leichtem Vakuum eingeengt und das Silan bei 3 hPa (abs.) überdestilliert. Es werden 85 g einer farblosen, leicht beweglichen Flüssigkeit, die gemäß dem $^1$H-NMR-Spektrum reines 3-Phenoxypropyldimethylethylsilan ist, erhalten. Die Jodzahl (= Zahl, die angibt, wieviel g Jod von 100 g Substanz gebunden werden) beträgt 115,2 (theoretisch 114,4).

c) 20,0 g (90 mMol) 3-Phenoxypropyldimethylethylsilan, dessen Herstellung oben unter b) beschrieben ist, in 30 g Methylenchlorid werden bei 0°C zu einer Lösung von 20 g Thionylchlorid und 5 g Zinntetrachlorid in 30 g Methylenchlorid getropft. Das Gemisch wird auf Raumtemperatur gebracht und 3 Stunden gerührt. Flüchtige Anteile werden bei 40°C im Vakuum entfernt, der Rest in Ethanol aufgenommen. Das Hexachlorostannat wird hydrolysiert durch Zugabe von Natronlauge bis zur schwach basischen Reaktion, filtriert und erneut bei 40°C im Vakuum einkonzentriert. Es werden 15,5 g eines gelblichen Öls, das langsam kristallisiert, erhalten. Das $^1$H-NMR-Spektrum zeigt das typische Pattern eines parasubstituierten Aromaten. Gemäß dem $^1$H-NMR-Spektrum wird reines Tris[4-(3-dimethylethylsilylpropyl)phenyl]sulfoniumchlorid erhalten. Aus Cyclohexan umkristallisiertes Salz hat einen Schmelzpunkt von 110°C.
Die Löslichkeit des Sulfoniumchlorids in Toluol bei 25°C wird untersucht. Die Ergebnisse sind in Tabelle 1 zusammengefaßt.

d) Zum Austausch der Anionen Chlorid gegen Hexafluoroantimonat werden 7,3 g (10 mMol) des Sulfoniumchlorids, dessen Herstellung oben unter c) beschrieben ist, in 20 ml Methylethylketon gelöst und unter Rühren wird eine Lösung von 3 g Natriumhexafluoroantimonat in 15 ml Methylethylketon zugegeben. Der Niederschlag von NaCl wird abfiltriert, die Lösung eingedampft. Das Sulfoniumhexafluoroantimonat wird mit Toluol aus dem rohen Öl extrahiert. Nach Entfernen des Lösemittels im Vakuum werden 8,8 g Tris[4-(3-dimethylethylsilylpropyl)phenyl]sulfoniumhexafluoroantimonat als orangegelbes, langsam kristallisierendes Öl erhalten.
Die Löslichkeit des Sulfoniumhexafluoroantimonats in Cyclohexan bei 25°C wird untersucht. Die Ergebnisse sind in Tabelle 1 zusammengefaßt.

**Vergleichsversuch 1:**

a) Tris-[4-octyloxyphenyl]sulfoniumchlorid wird analog Beispiel 1 c) aus Octylphenylether hergestellt. Das aus Toluol umkristallisierte Salz hat einen Schmelzpunkt von 95°C. Die Löslichkeit dieses Sulfoniumchlorids in Toluol bei 25°C wird mit der des erfindungsgemäßen Sulfoniumchlorids von Beispiel 1 c) verglichen (die Atomzahl beider Verbindungen ist gleich, im Sulfoniumchlorid von Beispiel 1 c) ist ein C-Atom durch ein Si-Atom ersetzt). Die Ergebnisse sind in Tabelle 1 zusammengefaßt.

b) Durch Umsalzen des obigen Sulfoniumchlorids mit Natriumhexafluoroantimonat in 2-Butanon, Filtration und Eindampfen wird ein gelbliches Öl, dessen Struktur als Tris-[4-octyloxyphenyl]sulfoniumhexafluoroantimonat im $^1$H-NMR-Spektrum bestätigt wird, erhalten. Es ist identisch mit dem Produkt von Beispiel 8 aus der eingangs erwähnten EP-A 404 031, welches dort in einer mehrstufigen Synthese hergestellt wird. Die Löslichkeit dieses Sulfoniumhexafluoroantimonats in Cyclohexan wird mit der des erfindungsgemäßen Sulfoniumhexafluoroantimonats von Beispiel 1 d) verglichen (die Atomzahl beider Verbindungen ist gleich, im Sulfoniumchlorid von Beispiel 1 d) ist ein C-Atom durch ein Si-Atom ersetzt). Die Ergebnisse sind in Tabelle 1 zusammengefaßt.

Tabelle 1:

| Beispiel bzw. Vergleichsversuch | g Sulfoniumsalz/100 g Toluol bzw. Cyclohexan |
|---|---|
| B 1c) $Cl^-$ | > 100 g/100 g Toluol |
| V 1a) $Cl^-$ | 60 g/100 g Toluol |
| B 1d) $SbF_6^-$ | 0,36 g/100 g Cyclohexan |
| V 1b) $SbF_6^-$ | < 0,10 g/100 g Cyclohexan |

Der Löslichkeitsunterschied zwischen den erfindungsgemäßen Sulfoniumsalzen und denen gemäß EP-A 404 031 ist beträchtlich.

**Beispiel 2:**

a) 690 g 2-Phenoxyethanol werden zusammen mit 470 g Allylchlorid zu einer Lösung von 600 g Natriumhydroxid und 14 g Trimethylbenzylammoniumchlorid in 600 ml Wasser gegeben. Das Gemisch wird unter Rückfluß erwärmt und solange stark gerührt bis die Gasraumtemperatur ca. 90°C erreicht hat. Nach dem Abkühlen des Gemisches werden 1,1 l Wasser zugefügt und die wäßrige Phase wird nach vollständiger Auflösung der Salze abgetrennt. Es wird dann noch zweimal mit je 300 ml 10 %iger Natriumchloridlösung nachgewaschen. Die organische Phase wird bei 8 hPa (abs.) fraktioniert destilliert und bei 73 - 76°C werden 877 g (98,5 % d.Th.) reiner 2-Allyloxyethylphenylether gewonnen.

b) 290 ml (2,6 Mol) Dimethylchlorsilan werden mit 6 mg Platin in Form einer Lösung des 1,3-Divinyl-tetramethyldisiloxankomplexes versetzt und unter Stickstoffatmosphäre auf Rückfluß erwärmt. 356 g des 2-Allyloxyethylphenylethers, dessen Herstellung oben unter a) beschrieben ist, werden über ca. 2 Stunden zugetropft, wobei man die Gemischtemperatur auf 80°C einstellt. Nach 2 Stunden hört der Rückfluß nahezu auf. Das Rohprodukt wird im Vakuum fraktioniert, wobei der Hauptlauf bei 95 - 110°C (2 hPa) abgenommen wird. Es werden 437 g 3-(2-Phenoxyethoxy)propyldimethylchlorsilan mit einer Säurezahl von 207 (theor. 205) erhalten. Das $^1$H-NMR-Spektrum zeigt, daß das Produkt weder Ausgangsmaterial noch dessen 1-Propenoxy-Isomer enthält.

c) Zu einer Octylgrignardlösung in Tetrahydrofuran aus 54 g Magnesiumspänen, 305 g 1-Chloroctan und insgesamt 1 l wasserfreiem Tetrahydrofuran werden bei 70 - 80°C 410 g (1,50 Mol) des destillierten Chlorsilans, dessen Herstellung oben unter b) beschrieben ist, zugetropft. Nach weiteren 3 Stunden bei 75°C wird das meiste Tetrahydrofuran destillativ entfernt und eine Lösung aus 250 g konzentrierter Salzsäure in 500 ml Wasser zugetropft. Das abgetrennte Rohsilan wird über eine kurze Vigreuxkolonne im Vakuum fraktioniert. Es werden 447 g farbloses Destillat erhalten, das gemäß dem $^1$H-NMR-Spektrum reines 3-(2-Phenoxyethoxy)propyldimethyloctylsilan ist und eine Säurezahl von kleiner 1 hat.

d) Die Arbeitsweise von Beispiel 1 unter c) wird wiederholt mit der Abänderung, daß 31,5 g (90 mMol) des Silans, dessen Herstellung oben unter c) beschrieben ist, anstelle der 20,0 g des Silans von Beispiel 1 c) und Toluol anstelle von Methylenchlorid verwendet wird. Es werden 27 g eines orangen Öls erhalten. Das $^1$H-NMR-Spektrum zeigt mehrere AA'BB'-Systeme. Hauptprodukt ist das Tris[4-(2-(3-dimethyloctylsilylpropyloxy)ethoxy)phenyl]sulfoniumchlorid mit ca. 65 Mol-%. Als Nebenprodukte enthalten sind die entsprechenden Zwischenstufen Sulfid und Sulfoxid.

Das Sulfoniumsalz ist in n-Heptan wie auch in Hexamethyldisiloxan lückenlos über den gesamten Konzentrationsbereich von 1 - 75 % löslich.

e) Die Arbeitsweise von Beispiel 1 unter d) wird wiederholt mit der Abänderung, daß 17,2 g (10 mMol)des Sulfoniumchlorids, dessen Herstellung oben unter d) beschrieben ist, anstelle der 7,3 g des Sulfoniumchlorids von Beispiel 1 d) eingesetzt werden. Das Sulfoniumhexafluoroantimonat wird mit Cyclohexan aus dem rohen Öl extrahiert, anschließend wird filtriert und bei 40°C im Vakuum eingedampft. Das $^1$H-NMR-Spektrum des erhaltenen Tris[4-(2-(3-dimethyloctylsilylpropyloxy)ethoxy)phenyl-] sulfoniumhexafluoroantimonats zeigt vollständigen Umsatz des Sulfoniumchlorids. Die Signale der ortho-Protonen zum Schwefel sind um 0,2 ppm nach hohem Feld hin verschoben.

**Beispiel 3:**

a) 148 g (1,0 Mol) 2-Allylanisol werden unter Stickstoffatmosphäre mit 8 mg Hexachloroplatinsäure vermischt und auf 70°C erwärmt. Zu der Mischung werden innerhalb von zwei Stunden 114 g (1,2 Mol) Dimethylchlorsilan zudosiert und die Mischung wird bei 70°C weitere vier Stunden gerührt. Überschüssiges Dimethylchlorsilan wird dann im Vakuum entfernt und durch Isomerisierung entstandenes 2-Propenylanisol wird über eine kurze Vigreuxkolonne abgetrennt. Es werden 204 g 3-(2-Anisyl)propyldimethylchlorsilan als klare Flüssigkeit mit einer Säurezahl von 227 erhalten.

b) Zur Alkylierung werden 122 g (0,50 Mol) des Chlorsilans, dessen Herstellung oben unter a) beschrieben ist, zu 320 ml einer 1,8-molaren Lösung von n-Octylmagnesiumchlorid in Tetrahydrofuran zugetropft und die Mischung wird weitere sechs Stunden bei Rückflußtemperatur gerührt. Zu der Mischung wird dann soviel verdünnte Salzsäure gegeben, bis zwei klare Phasen entstehen. Nach Abtrennen der Magnesiumsalzlösung wird dreimal mit je 200 ml Wasser gewaschen und das restliche Tetrahydrofuran wird entfernt. Nach Destillation im Vakuum werden 144 g 3-(2-Anisyl)propyldimethyloctylsilan mit einer Jodzahl von 80,1 und einer Säurezahl von kleiner als 1 erhalten. Das $^1$H-NMR-Spektrum zeigt ein Verhältnis von Methoxy- zu n-Octylgruppen von genau 1,0.

c) Die Arbeitsweise von Beispiel 1 unter c) wird wiederholt mit der Abänderung, daß 29,0 g (90 mMol) des 3-(2-Anisyl) propyldimethyloctylsilans, dessen Herstellung oben unter b) beschrieben ist, anstelle der 20 g des Silans von Beispiel 1 c) eingesetzt wird und die Extraktion des Rohsalzes in Cyclohexan anstelle von Ethanol erfolgt. Nach Entfernen des Lösemittels werden 27,7 g eines gelblichen Öls erhalten, aus dessen $^1$H-NMR-Spektrum ein Gehalt an entsprechendem Sulfoniumchlorid von über 90 % ersichtlich ist. Die aromatischen Protonensignale entsprechen einer 1,2,4-Substitution. Das Tris[3-(3-Dimethyloctylsilylpropyl)-4-methoxyphenyl]sulfoniumsalz ist in n-Heptan wie in Hexamethyldisiloxan unbegrenzt löslich.

d) Die Arbeitsweise von Beispiel 2 unter e) wird wiederholt mit der Abänderung, daß 11,0 g (10 mMol) des Sulfoniumchlorids, dessen Herstellung oben unter c) beschrieben ist, anstelle der 17,2 g des Sulfoniumchlorids von Beispiel 2 e) eingesetzt werden. Das einkonzentrierte Produkt (12,2 g) kristallisiert langsam beim Stehen bei Raumtemperatur. Gemäß dem $^1$H-NMR-Spektrum wird reines Tris[3-(3-dimethyloctylsilylpropyl)-4-methoxyphenyl]sulfoniumhexafluoroantimonat erhalten. Eine aus Hexamethyldisiloxan umkristallisierte Probe hat einen Schmelzpunkt von 67°C.

**Beispiel 4**

a) 600 g Natriumhydroxid werden in 600 ml Wasser gelöst und 14 g Trimethylbenzylammoniumchlorid sowie 670 g 2-Allylphenol zugegeben. Es wird auf ca. 80°C aufgeheizt und innerhalb von ca. 2 Stunden insgesamt 1030 g 1-Brombutan zugetropft. Nachdem die Innentemperatur auf fast 100°C angestiegen ist, wird bei gleicher Temperatur weitere 4 Stunden ausreagieren gelassen. Das entstandene Salz wird durch Zugabe von 1250 ml Wasser gelöst und der Ether in 500 ml Toluol aufgenommen. Die abgetrennte organische Phase wird zweimal mit je 500 ml 5 %iger NaOH bewaschen und wird bei 50°C und 5 hPa einkonzentriert. Es werden 921 g rohes 2-Butoxyallylbenzol, welches Spuren an Lösungsmitteln (Toluol, n-Butanol) enthält, sowie geringe Mengen an kernalkyliertem 2-Butoxyallylbenzol erhalten. Gemäß dem $^1$H-NMR-Spektrum ist die O-Alkylierung vollständig.

b) 921 g ca. 94 %iges 2-Butoxyallylbenzol, dessen Herstellung oben unter a) beschrieben ist, werden zusammmen

mit 15 mg Platin als 1,3-Divinyl-tetramethyldisiloxankomplex vorgelegt und unter Stickstoffatmosphäre auf 80°C erwärmt. Es werden innerhalb von 5 Stunden insgesamt 620 g Dimethylchlorsilan zugetropft. Es wird noch 2 Stunden bei ca. 70°C nachreagieren gelassen und es wird überschüssiges Silan abdestilliert. Die Destillation im Ölpumpenvakuum liefert zwischen 95 und 115°C insgesamt 1135 g farbloses 3-(2-Butoxyphenyl)propyldimethylchlorsilan mit einer Säurezahl von 203 (theor. 198).

c) Zu einer Octylgrignardlösung aus 1,50 Mol Magnesium und 1,55 Mol 1-Chloroctan in 700 ml Tetrahydrofuran werden bei 70°C insgesamt 275 g des Chlorsilans der Säurezahl 203, dessen Herstellung oben unter b) beschrieben ist, zugetropft, und das milchige Reaktionsgemisch wird über Nacht bei gleicher Temperatur gerührt. Tetrahydrofuran wird dann weitgehend abdestilliert, die Magnesiumsalze werden durch verdünnte Salzsäure aufgelöst. Die organische Phase wird abgetrennt, filtriert und im Vakuum bei 100°C von flüchtigen Stoffen befreit. Es werden 347 g 3-(2-Butoxyphenyl)propyldimethyloctylsilan erhalten. Das $^1$H-NMR-Spektrum zeigt ein Verhältnis von Butoxy- zu Octylgruppen von genau 1,0.

d) Die Arbeitsweise von Beispiel 1 unter c) wird wiederholt mit der Abänderung, daß 326 g des Silans, dessen Herstellung oben unter c) beschrieben ist, anstelle der 20,0 g des Silans von Beispiel 1 c) eingesetzt werden. Die Aufarbeitung ergibt 340 g eines hochviskosen gelblichen Öls, dessen $^1$H-NMR-Spektrum die vollständige Umsetzung des eingesetzten Silans sowie das typische Pattern eines 1,2,4-substituierten Aromaten zeigt. Tris[3-(3-dimethyloctylsilylpropyl)-4-butoxyphenyl]sulfoniumchlorid ist in Hexamethyldisiloxan unbegrenzt löslich.

e) 115 g des Sulfoniumchlorids, dessen Herstellung oben unter d) beschrieben ist, werden mit 150 g Methylethylketon verdünnt und mit einer Lösung aus 31 g $NaSbF_6$ in 150 g Methylethylketon versetzt. Nach ca. 1 Stunde wird das NaCl abfiltiert, das Methylethylketon im Vakuum entfernt, das trübe Öl mit 300 ml Cyclohexan gelöst und filtriert. Nach Eindampfen des Lösemittels im Vakuum werden 130 g eines gelblichen Öls, aus dessen $^1$H-NMR-Spektrum die vollständige Umsalzung zum Hexafluoroantimonat ersichtlich ist, erhalten. Das Salz ist in n-Heptan beliebig löslich.

f) In ähnlicher Weise werden 115 g des Sulfoniumchlorids, dessen Herstellung oben unter d) beschrieben ist, mit 17 g $NaPF_6$ in 150 g Ethanol umgesetzt und, wie oben unter e) beschrieben, aufgearbeitet. Es werden 123 g des Tris[3-(3-dimethyloctylsilylpropyl)-4-butoxyphenyl]sulfoniumhexafluorophosphats als zähes orangegelbes Öl erhalten, das langsam kristallisiert und im $^1$H-NMR-Spektrum das gleiche Signalmuster wie das von Beispiel 4 e) zeigt. Es ist in n-Heptan beliebig löslich.

## Patentansprüche

1. Sulfoniumsalze der allgemeinen Formel

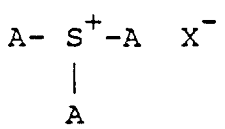 ,

wobei A gleich oder verschieden ist und einen einwertigen Rest der allgemeinen Formel

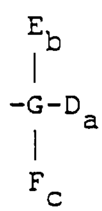

bedeutet, worin

G einen aromatischen Kohlenwasserstoffrest mit 6 bis 14 Kohlenstoffatomen je Rest oder einen mindestens ein Sauerstoff- und/oder Schwefelatom enthaltenden aromatischen Kohlenwasserstoffrest mit 5 bis 14 Ringatomen je Rest bedeutet, mit der Maßgabe, daß im Rest G ein Wasserstoffatom durch eine chemische Bindung zum Schwefelatom ersetzt ist und

D, E und F jeweils Substituenten von G bedeuten, wobei
D einen Rest der Formel

$$-(O)_x-(R)_y-SiR^1_3,$$

E einen Rest der Formel

$$-OR^2,$$

F einen Rest der Formel

$$-R^3,$$

a 1, 2 oder 3,
b 0, 1 oder 2,
c 0, 1 oder 2,
x 0 oder 1,
y 0 oder 1,
R einen zweiwertigen Kohlenwasserstoffrest mit 1 bis 18 Kohlenstoffatomen je Rest, der gegebenfalls durch mindestens ein Sauerstoffatom und/oder ein Schwefelatom und/oder eine Carboxylgruppe unterbrochen ist,
$R^1$ gleich oder verschieden ist und einen einwertigen Kohlenwasserstoffrest mit 1 bis 18 Kohlenstoffatomen je Rest, der gegebenenfalls durch mindestens ein Sauerstoffatom unterbrochen ist,
$R^2$ einen einwertigen Kohlenwasserstoffrest mit 1 bis 18 Kohlenstoffatomen je Rest, der gegebenenfalls durch mindestens ein Sauerstoffatom unterbrochen ist,
$R^3$ einen einwertigen Kohlenwasserstoffrest mit 1 bis 10 Kohlenstoffatomen je Rest, der gegebenenfalls durch mindestens ein Sauerstoffatom und/oder ein Schwefelatom unterbrochen ist, und
$X^-$ ein Halogenidion $Z^-$, ein Tosylatanion oder ein schwach nukleophiles oder nicht nukleophiles Anion $Y^-$, ausgewählt aus der Gruppe von $CF_3CO_2^-$, $BF_4^-$, $PF_6^-$, $AsF_6^-$, $SbF_6^-$, $ClO_4^-$, $HSO_4^-$ und $C_nF_{(2n+1-m)}H_m$-$SO_3^-$, wobei n eine ganze Zahl von 1 bis 12 und
m 0 oder eine ganze Zahl im Wert von bis zu 2n-1 ist,
bedeutet.

**2.** Sulfoniumsalze nach Anspruch 1, dadurch gekennzeichnet, daß A einen Rest der Formel

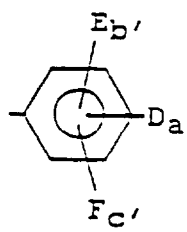

bedeutet, wobei D, E und F jeweils einen in 2-, 3-, 4-, 5- oder 6-Position an den Benzolring gebundenen Rest bedeuten,

D einen Rest der Formel

$$-(O)_x-(R)_y-SiR^1_3,$$

E einen Rest der Formel

$$-OR^2,$$

F einen Rest der Formel

$$-R^3,$$

R einen zweiwertigen Kohlenwasserstoffrest mit 1 bis 18 Kohlenstoffatomen je Rest, der gegebenfalls durch mindestens ein Sauerstoffatom und/oder ein Schwefelatom und/oder eine Carboxylgruppe unterbrochen ist,
$R^1$ gleich oder verschieden ist und einen einwertigen Kohlenwasserstoffrest mit 1 bis 18 Kohlenstoffatomen je Rest, der gegebenenfalls durch mindestens ein Sauerstoffatom unterbrochen ist,
$R^2$ einen einwertigen Kohlenwasserstoffrest mit 1 bis 18 Kohlenstoffatomen je Rest, der gegebenenfalls durch mindestens ein Sauerstoffatom unterbrochen ist,

$R^3$ einen einwertigen Kohlenwasserstoffrest mit 1 bis 10 Kohlenstoffatomen je Rest, der gegebenenfalls durch mindestens ein Sauerstoffatom und/oder ein Schwefelatom unterbrochen ist,
a 1, 2 oder 3,
b' 0 oder 1,
c' 0 oder 1,
x 0 oder 1 und
y 0 oder 1 bedeutet.

**3.** Sulfoniumsalze nach Anspruch 1 oder 2, dadurch gekennzeichnet, daß es solche der allgemeinen Formel

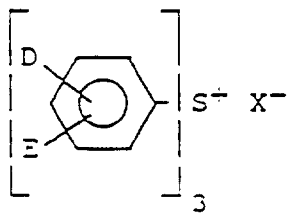

sind, wobei D einen Rest der Formel und

$$-(O)_x-(R)_y-SiR^1_3,$$

E einen Rest der Formel

$$-OR^2$$

bedeutet, worin

R einen zweiwertigen Kohlenwasserstoffrest mit 1 bis 18 Kohlenstoffatomen je Rest, der gegebenenfalls durch mindestens ein Sauerstoffatom und/oder ein Schwefelatom und/oder eine Carboxylgruppe unterbrochen ist,
$R^1$ gleich oder verschieden ist und einen einwertigen Kohlenwasserstoffrest mit 1 bis 18 Kohlenstoffatomen je Rest, der gegebenenfalls durch mindestens ein Sauerstoffatom unterbrochen ist,
$R^2$ einen einwertigen Kohlenwasserstoffrest mit 1 bis 18 Kohlenstoffatomen je Rest, der gegebenenfalls durch mindestens ein Sauerstoffatom unterbrochen ist,
$X^-$ ein Halogenidion $Z^-$, ein Tosylatanion oder ein schwach nukleophiles oder nicht nukleophiles Anion $Y^-$, ausgewählt aus der Gruppe von $CF_3CO_2^-$, $BF_4^-$, $PF_6^-$, $AsF_6^-$, $SbF_6^-$, $ClO_4^-$, $HSO_4^-$ und $C_nF_{(2n+1-m)}H_m-SO_3^-$, wobei n eine ganze Zahl von 1 bis 12 und
m 0 oder eine ganze Zahl im Wert von bis zu 2n-1 ist,
x 0 oder 1 und
y 0 oder 1 bedeutet.

**4.** Sulfoniumsalze nach Anspruch 1, 2 oder 3, dadurch gekennzeichnet, daß es solches der Formel

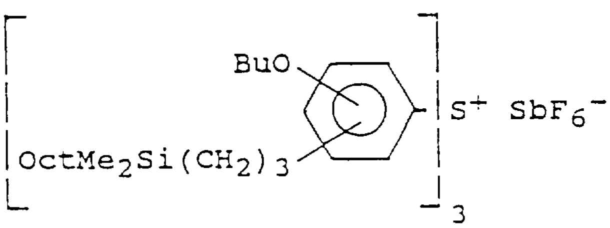

ist, wobei Me einen Methylrest und Oct einen n-Octylrest bedeutet.

**5.** Verfahren zur Herstellung der Sulfoniumsalze nach einem der Ansprüche 1 bis 4, dadurch gekennzeichnet, daß in einer 1. Stufe
ein Silan der Formel

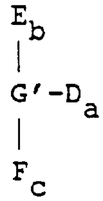

worin G' einen aromatischen Kohlenwasserstoffrest mit 6 bis 14 Kohlenstoffatomen je Rest oder einen mindestens ein Sauerstoff- und/oder Schwefelatom enthaltenden aromatischen Kohlenwasserstoffrest mit 5 bis 14 Ringatomen je Rest bedeutet und
D, E und F jeweils Substituenten von G' bedeuten, wobei

D einen Rest der Formel

$$-(O)_x-(R)_y-SiR^1_3,$$

E einen Rest der Formel

$$-OR^2,$$

F einen Rest der Formel

$$-R^3,$$

a 1, 2 oder 3,
b 0, 1 oder 2,
c 0, 1 oder 2,
x 0 oder 1,
y 0 oder 1,
R einen zweiwertigen Kohlenwasserstoffrest mit 1 bis 18 Kohlenstoffatomen je Rest, der gegebenfalls durch mindestens ein Sauerstoffatom und/oder ein Schwefelatom und/oder eine Carboxylgruppe unterbrochen ist,
$R^1$ gleich oder verschieden ist und einen einwertigen Kohlenwasserstoffrest mit 1 bis 18 Kohlenstoffatomen je Rest, der gegebenenfalls durch mindestens ein Sauerstoffatom unterbrochen ist,
$R^2$ einen einwertigen Kohlenwasserstoffrest mit 1 bis 18 Kohlenstoffatomen je Rest, der gegebenenfalls durch mindestens ein Sauerstoffatom unterbrochen ist, und
$R^3$ einen einwertigen Kohlenwasserstoffrest mit 1 bis 10 Kohlenstoffatomen je Rest, der gegebenenfalls durch mindestens ein Sauerstoffatom und/oder ein Schwefelatom unterbrochen ist, bedeutet,
mit Thionylhalogenid in Gegenwart einer Lewissäure und einem inerten organischen Lösungsmittel

zu einem Sulfoniumhalogenid der Formel

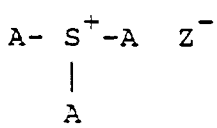 ,

wobei A gleich oder verschieden ist und einen einwertigen Rest der allgemeinen Formel

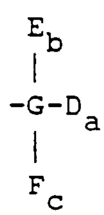 ,

worin G einen aromatischen Kohlenwasserstoffrest mit 6 bis 14 Kohlenstoffatomen je Rest oder einen mindestens ein Sauerstoff- und/oder Schwefelatom enthaltenden aromatischen Kohlenwasserstoffrest mit 5 bis 14 Ringatomen je Rest bedeutet, mit der Maßgabe, daß im Rest G ein Wasserstoffatom durch eine chemische Bindung zum Schwefelatom ersetzt ist und D, E und F jeweils Substituenten von G bedeuten,

D, E, F, a, b und c die oben dafür angegebene Bedeutung haben und $Z^-$ ein Halogenidion bedeutet, umgesetzt wird und gegebenenfalls in einer 2. Stufe das so erhaltene Sulfoniumhalogenid mit einem Alkalimetallsalz der Formel

$$M^+Y^-,$$

wobei $M^+$ ein Alkalikation, Ammoniumion oder ein quaternäres Ammoniumkation, $Y^-$ ein schwach nukleophiles oder nicht nukleophiles Anion, ausgewählt aus der Gruppe von $CF_3CO_2^-$, $BF_4^-$, $PF_6^-$, $AsF_6^-$, $SbF_6^-$, $ClO_4^-$, $HSO_4^-$ und $C_nF_{(2n+1-m)}H_m$-$SO_3^-$, wobei n eine ganze Zahl von 1 bis 12 und m 0 oder eine ganze Zahl im Wert von bis zu 2n-1 ist, bedeutet, in Gegenwart von organischem Lösungsmittel umgesetzt wird.

**6.** Verfahren nach Anspruch 5, dadurch gekennzeichnet, daß $Y^-$ ein Anion der Formel $SbF_6^-$ bedeutet.

**Claims**

**1.** Sulphonium salts of the general formula

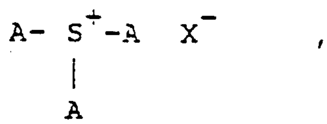

in which each A is identical or different and is a monovalent radical of the general formula

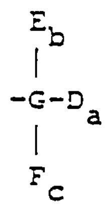

in which

G is an aromatic hydrocarbon radical having 6 to 14 carbon atoms per radical or is an aromatic hydrocarbon radical having 5 to 14 ring atoms per radical which contains at least one oxygen and/or sulphur atom, with the proviso that one hydrogen atom in the radical G is replaced by a chemical bond to the sulphur atom, and D, E and F are each substituents of G, where D is a radical of the formula

$$-(O)_x-(R)_y-SiR^1_3,$$

E is a radical of the formula

$$-OR^2,$$

F is a radical of the formula

$$-R^3,$$

a is 1, 2 or 3,
b is 0, 1 or 2,
c is 0, 1 or 2,
x is 0 or 1,
y is 0 or 1,
R is a divalent hydrocarbon radical having 1 to 18 carbon atoms per radical, which is optionally interrupted by at least one oxygen atom and/or one sulphur atom and/or one carboxyl group,

each $R^1$ is identical or different and is a monovalent hydrocarbon radical having 1 to 18 carbon atoms per radical, which is optionally interrupted by at least one oxygen atom,
$R^2$ is a monovalent hydrocarbon radical having 1 to 18 carbon atoms per radical, which is optionally interrupted by at least one oxygen atom,
$R^3$ is a monovalent hydrocarbon radical having 1 to 10 carbon atoms per radical, which is optionally interrupted by at least one oxygen atom and/or one sulphur atom, and $X^-$ is a halide ion $Z^-$, a tosylate anion or a weakly nucleophilic or non-nucleophilic anion $Y^-$ selected from the group comprising $CF_3CO_2^-$, $BF_4^-$, $PF_6^-$, $AsF_6^-$, $SbF_6^-$, $ClO_4^-$, $HSO_4^-$ and $C_nF_{(2n+1-m)}H_m\text{-}SO_3^-$,
in which n is an integer from 1 to 12 and
m is 0 or an integer of up to 2n-1.

**2.** Sulphonium salts according to Claim 1, characterized in that A is a radical of the formula

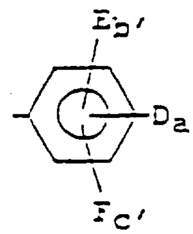

in which D, E and F are each a radical bonded in the 2-, 3-, 4-, 5- or 6-position to the benzene ring,

D is a radical of the formula

$$-(O)_x-(R)_y-SiR^1_3,$$

E is a radical of the formula

$$-OR^2,$$

F is a radical of the formula

$$-R^3,$$

R is a divalent hydrocarbon radical having 1 to 18 carbon atoms per radical, which is optionally interrupted by at least one oxygen atom and/or one sulphur atom and/or one carboxyl group,
each $R^1$ is identical or different and is a monovalent hydrocarbon radical having 1 to 18 carbon atoms per radical which is optionally interrupted by at least one oxygen atom,
$R^2$ is a monovalent hydrocarbon radical having 1 to 18 carbon atoms per radical, which is optionally interrupted by at least one oxygen atom,
$R^3$ is a monovalent hydrocarbon radical having 1 to 10 carbon atoms per radical which is optionally interrupted by at least one oxygen atom and/or one sulphur atom,
a is 1, 2 or 3,
b' is 0 or 1,
c' is 0 or 1,
x is 0 or 1 and
y is 0 or 1.

**3.** Sulphonium salts according to Claim 1 or 2, characterized in that they have the general formula

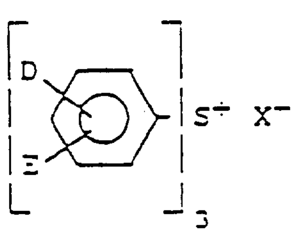

in which D is a radical of the formula

$$-(O)_x-(R)_y-SiR^1_3,$$

and E is a radical of the formula

$$-OR^2$$

in which
R is a divalent hydrocarbon radical having 1 to 18 carbon atoms per radical, which is optionally interrupted by at least one oxygen atom and/or one sulphur atom and/or one carboxyl group,
each $R^1$ is identical or different and is a monovalent hydrocarbon radical having 1 to 18 carbon atoms per radical, which is optionally interrupted by at least one oxygen atom,
$R^2$ is a monovalent hydrocarbon radical having 1 to 18 carbon atoms per radical, which is optionally interrupted by at least one oxygen atom,
$X^-$ is a halide ion $Z^-$, a tosylate anion or a weakly nucleophilic or non-nucleophilic anion $Y^-$ selected from the group comprising $CF_3CO_2^-$, $BF_4^-$, $PF_6^-$, $AsF_6^-$, $SbF_6^-$, $ClO_4^-$, $HSO_4^-$ and $C_nF_{(2n+1-m)}H_m-SO_3^-$, in which n is an integer from 1 to 12 and
m is 0 or an integer of up to 2n-1,
x is 0 or 1 and
y is 0 or 1.

**4.** Sulphonium salts according to Claim 1, 2 or 3, characterized in that they have the formula

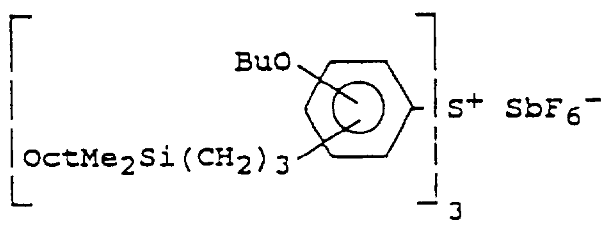

in which Me is a methyl radical and Oct is an n-octyl radical.

**5.** Process for the preparation of sulphonium salts according to one of Claims 1 to 4, characterized in that in a 1st stage a silane of the formula

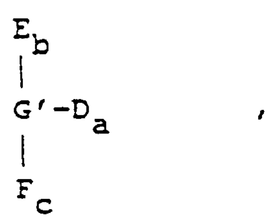

in which G' is an aromatic hydrocarbon radical having 6 to 14 carbon atoms per radical or an aromatic hydrocarbon radical having 5 to 14 ring atoms per radical and containing at least one oxygen and/or sulphur atom, and D, E and F are each substituents of G', where
D is a radical of the formula

$$-(O)_x-(R)_y-SiR^1_3,$$

and E is a radical of the formula

$$-OR^2,$$

F is a radical of the formula

$$-R_3,$$

a is 1, 2 or 3,
b is 0, 1 or 2,
c is 0, 1 or 2,
x is 0 or 1,

y is 0 or 1,
R is a divalent hydrocarbon radical having 1 to 18 carbon atoms per radical, which is optionally interrupted by at least one oxygen atom and/or one sulphur atom and/or one carboxyl group,
each $R^1$ is identical or different and is a monovalent hydrocarbon radical having 1 to 18 carbon atoms per radical, which is optionally interrupted by at least one oxygen atom,
$R^2$ is a monovalent hydrocarbon radical having 1 to 18 carbon atoms per radical which is optionally interrupted by at least one oxygen atom, and
$R^3$ is a monovalent hydrocarbon radical having 1 to 10 carbon atoms per radical, which is optionally interrupted by at least one oxygen atom and/or a sulphur atom,

is reacted with thionyl halide in the presence of a Lewis acid and an inert organic solvent to give a sulphonium halide of the formula

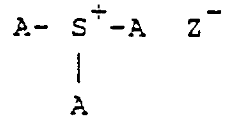 ,

in which each A is identical or different and is a monovalent radical of the general formula

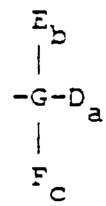 ,

in which G is an aromatic hydrocarbon radical having 6 to 14 carbon atoms per radical or an aromatic hydrocarbon radical having 5 to 14 ring atoms per radical and containing at least one oxygen and/or sulphur atom, with the proviso that one hydrogen atom in the radical G is replaced by a chemical bond to the sulphur atom and D, E and F are each substituents of G,
D, E, F, a, b and c are as defined above
and $Z^-$ is a halide ion,
and optionally
in a 2nd stage
the resulting sulphonium halide is reacted with an alkali metal salt of the formula

$$M^+Y^-,$$

in which $M^+$ is an alkali metal cation, ammonium ion or a quaternary ammonium cation,
$Y^-$ is a weakly nucleophilic or non-nucleophilic anion selected from the group comprising
$CF_3CO_2^-$, $BF_4^-$, $PF_6^-$, $AsF_6^-$, $SbF_6^-$, $ClO_4^-$, $HSO_4^-$ and $C_nF_{(2n+1-m)}H_m\text{-}SO_3^-$,
in which n is an integer from 1 to 12 and
m is 0 or an integer of up to 2n-1,
in the presence of organic solvent.

**6.** Process according to Claim 5, characterized in that $Y^-$ is an anion of the formula $SbF_6^-$.

### Revendications

**1.** Sels de sulfonium de formule générale

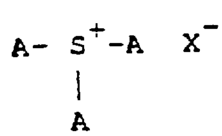 ,

où A est identique ou différent et représente un radical monovalent de formule générale

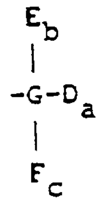

où

G représente un radical hydrocarbure aromatique avec 6 à 14 atomes de carbone par radical ou un radical hydrocarbure aromatique contenant au moins un atome d'oxygène et/ou de soufre avec 5 à 14 atomes cycliques par radical, avec la condition que dans le radical G, un atome d'hydrogène est remplacé par un lien chimique à l'atome de soufre et
D, E et F sont chacun des substituants de G, où
D représente un radical de formule

$$-(O)_x-(R)_y-SiR^1_3 ,$$

E représente un radical de formule

$$-OR^2$$

F représente un radical de formule

$$-R^3$$

a 1, 2 ou 3,
b 0, 1 ou 2,
c 0, 1 ou 2,
x 0 ou 1,
y 0 ou 1,
R représente un radical hydrocarbure bivalent avec 1 à 18 atomes de carbone par radical, qui est facultativement interrompu par au moins un atome d'oxygène et/ou un atome de soufre et/ou un groupe carboxyle,
$R^1$ est identique ou différent et représente un radical hydrocarbure monovalent avec 1 à 18 atomes de carbone par radical, qui est facultativement interrompu par au moins un atome d'oxygène,
$R^2$ représente un radical hydrocarbure monovalent avec 1 à 18 atomes de carbone par radical, qui est facultativement interrompu par au moins un atome d'oxygène,
$R^3$ représente un radical hydrocarbure monovalent avec 1 à 10 atomes de carbone par radical, qui est facultativement interrompu par au moins un atome d'oxygène et/ou un atome de soufre, et
$X^-$ représente un ion halogénure $Z^-$, un anion tosylate ou un anion $Y^-$ faiblement nucléophile ou non nucléophile choisi dans le groupe composé de $CF_3CO_2^-$, $BF_4^-$, $PF_6^-$, $AsF_6^-$, $SbF_6^-$, $ClO_4^-$, $HSO_4^-$ et $C_nF_{(2n+1-m)}H_mSO_3^-$, où n représente un nombre entier de 1 à 12 et
m 0 ou un nombre entier ayant une valeur de jusqu'à 2n-1.

**2.** Sels de sulfonium suivant la revendication 1, caractérisés en ce que A représente un radical de formule

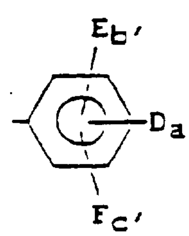

où D, E et F représentent chacun un radical lié au cycle benzénique en position 2, 3, 4, 5 ou 6,

D représente un radical de formule

$$-(O)_x-(R)_y-SiR^1_3 ,$$

E représente un radical de formule

$$-OR^2$$

F représente un radical de formule

$$-R^3$$

R représente un radical hydrocarbure bivalent avec 1 à 18 atomes de carbone par radical, qui est facultativement interrompu par au moins un atome d'oxygène et/ou un atome de soufre et/ou un groupe carboxyle,
$R^1$ est identique ou différent et représente un radical hydrocarbure monovalent avec 1 à 18 atomes de carbone par radical, qui est facultativement interrompu par au moins un atome d'oxygène,
$R^2$ représente un radical hydrocarbure monovalent avec 1 à 18 atomes de carbone par radical, qui est facultativement interrompu par au moins un atome d'oxygène,
$R^3$ représente un radical hydrocarbure monovalent avec 1 à 10 atomes de carbone par radical, qui est facultativement interrompu par au moins un atome d'oxygène et/ou un atome de soufre,
a 1, 2 ou 3,
b' 0 ou 1,
c' 0 ou 1,
x 0 ou 1 et
y 0 ou 1.

**3.** Sels de sulfonium suivant la revendication 1 ou 2, caractérisés en ce que ce sont ceux de formule générale

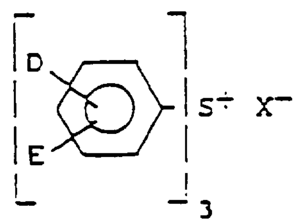

où

D représente un radical de formule

$$-(O)_x-(R)_y-SiR^1_3 ,$$

E représente un radical de formule

$$-OR^2$$

où
R représente un radical hydrocarbure bivalent avec 1 à 18 atomes de carbone par radical, qui est facultativement interrompu par au moins un atome d'oxygène et/ou un atome de soufre et/ou un groupe carboxyle,
$R^1$ est identique ou différent et représente un radical hydrocarbure monovalent avec 1 à 18 atomes de carbone par radical, qui est facultativement interrompu par au moins un atome d'oxygène,
$R^2$ représente un radical hydrocarbure monovalent avec 1 à 18 atomes de carbone par radical, qui est facultativement interrompu par au moins un atome d'oxygène,
$X^-$ représente un ion halogénure $Z^-$, un anion tosylate où un anion $Y^-$ faiblement nucléophile ou non nucléophile choisi dans le groupe composé de $CF_3CO_2^-$, $BF_4^-$, $PF_6^-$, $AsF_6^-$, $SbF_6^-$, $ClO_4^-$, $HSO_4^-$, et $C_nF_{(n+1-m)}H_mSO_3^-$, où n représente un nombre entier de 1 à 12 et
m 0 ou un nombre entier ayant une valeur de jusqu'à 2n-1,
x représente 0 ou 1 et
y 0 ou 1.

**4.** Sels de sulfonium suivant la revendication 1, 2 ou 3, caractérisés en ce que ce sont ceux de formule

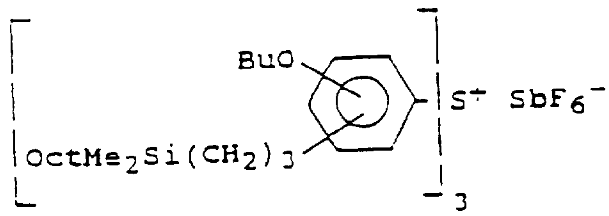

où Me représente un radical méthyle et Oct, un radical n-octyle.

**5.** Procédé de préparation des sels de sulfonium suivant l'une quelconque des revendications 1 à 4, caractérisé en ce que
dans une première étape
un silane de formule

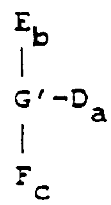 ,

où

G' représente un radical hydrocarbure aromatique avec 6 à 14 atomes de carbone par radical ou un radical hydrocarbure aromatique contenant au moins un atome d'oxygène et/ou de soufre avec 5 à 14 atomes cycliques par radical et
D, E et F sont chacun des substituants de G', où D représente un radical de formule

$$-(O)_x-(R)_y-SiR^1_3 ,$$

E représente un radical de formule

$$-OR^2$$

F représente un radical de formule

$$-R^3$$

a 1, 2 ou 3,
b 0, 1 ou 2,
c 0, 1 ou 2,
x 0 ou 1,
y 0 ou 1,
R représente un radical hydrocarbure bivalent avec 1 à 18 atomes de carbone par radical, qui est facultativement interrompu par au moins un atome d'oxygène et/ou un atome de soufre et/ou un groupe carboxyle,
$R^1$ est identique ou différent et représente un radical hydrocarbure monovalent avec 1 à 18 atomes de carbone par radical, qui est facultativement interrompu par au moins un atome d'oxygène,
$R^2$ représente un radical hydrocarbure monovalent avec 1 à 18 atomes de carbone par radical, qui est facultativement interrompu par au moins un atome d'oxygène, et
$R^3$ représente un radical hydrocarbure monovalent avec 1 à 10 atomes de carbone par radical, qui est facultativement interrompu par au moins un atome d'oxygène et/ou un atome de soufre,

est mis à réagir avec un halogénure de thionyle en présence d'un acide de Lewis et un solvant organique inerte en un halogénure de sulfonium de formule

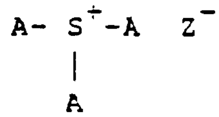,

où A est identique ou différent et représente un radical monovalent de formule générale

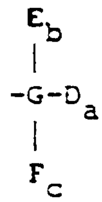,

où

G représente un radical hydrocarbure aromatique avec 6 à 14 atomes de carbone par radical ou un radical hydrocarbure aromatique contenant au moins un atome d'oxygène et/ou de soufre avec 5 à 14 atomes cycliques par radical, avec la condition que dans le radical G, un atome d'hydrogène est remplacé par un lien chimique à l'atome de soufre et D, E et F représentent chacun des substituants de G,

D, E, F, a, b et c ont la signification donnée précédemment

et $Z^-$ représente un ion halogénure,

et facultativement

dans une deuxième étape

l'halogénure de sulfonium ainsi obtenu est mis à réagir avec un sel de métal alcalin de formule

$$M^+Y^-$$

où $M^+$ représente un cation alcalin, un ion ammonium ou un cation ammonium quaternaire,

$Y^-$ représente un anion faiblement nucléophile ou non nucléophile choisi dans le groupe composé de $CF_3CO_2^-$, $BF_4^-$, $PF_6^-$, $AsF_6^-$, $SbF_6^-$, $ClO_4^-$, $HSO_4^-$ et $C_nF_{(2n+1m)}H_mSO_3^-$,

où n représente un nombre entier de 1 à 12 et

m 0 ou un nombre entier ayant une valeur de jusqu'à 2n-1, en présence d'un solvant organique.

**6.** Procédé suivant la revendication 5, caractérisé en ce que $Y^-$ représente un anion de formule $SbF_6^-$.